Europäisches Patentamt

European Patent Office

Office européen des brevets

(11) Publication number: **0 162 509**
**B1**

(12) **EUROPEAN PATENT SPECIFICATION**

(45) Date of publication of patent specification: **01.02.89**

(51) Int. Cl.⁴: **F 26 B 21/08, B 01 D 53/26**

(21) Application number: **85200628.7**

(22) Date of filing: **23.04.85**

(54) **Process and apparatus for extracting liquids from aggregates and from gas/vapor mixtures.**

(30) Priority: **25.04.84 LU 85336**
**21.12.84 LU 85708**

(43) Date of publication of application:
**27.11.85 Bulletin 85/48**

(45) Publication of the grant of the patent:
**01.02.89 Bulletin 89/05**

(84) Designated Contracting States:
**AT BE CH DE FR GB IT LI NL SE**

(56) References cited:
**FR-A-1 230 416**
**FR-A-2 535 445**
**US-A-3 977 850**

(73) Proprietor: **S.A. SEPARGAZ**
**Rue Aldringen, 11**
**L-2960 Luxembourg (LU)**

(72) Inventor: **Maldague, Pierre**
**avenue Winston Churchill 232**
**B-1180 Brussels (BE)**

(74) Representative: **Van Malderen, Michel et al**
**p.a. Freylinger & Associés 22 avenue J.S. Bach**
**(bte 43)**
**B-1080 Bruxelles (BE)**

Courier Press, Leamington Spa, England.

## Description

### Technical field

The present invention relates to the extraction of a liquid from an aggregate, by evaporation in a stream of a carrier gas, followed by aerodynamic separation of said evaporated liquid from said carrier gas.

In this specification, evaporation has a broad meaning which includes the production of vapor by a chemical reaction such as combustion. Similarly, aggregate has a broad meaning which not only includes materials soaked with a liquid, such as wet barley, paper, cardboard, plaster, but also materials which react with a gas, thus forming a vapor mixed with a carrier gas (for example methanisation gas, natural gas, burnable waste products, fuel oil, coal, peat, brown coal, burning in air).

More specifically, the invention relates to the way of putting at work the driving energy which provides the separative work, and of carrying out said separation.

According to the invention, said driving energy is provided substantially under mechanical form to the carrier gas by one or several blowers which move the main stream of gaseous mixture against all head losses throughout the complete circuit of evaporation and separation, whether closed or open, and the vapor separation occurs essentially in an aerodynamic separator having no moving part.

A first main application of the invention is the industrial drying, wherein it allows to recover water vapor and its latent heat from air/vapor mixtures, using robust and cheap equipment with low energy consumption, i.e. a blower and an aerodynamic separator, instead of delicate and expensive apparatus such as heat pumps.

A second main application of the invention is the abatement of acid gases, such as sulphur dioxide and nitrogen oxides, from flue gases produced by combustion in boilers, furnaces, incinerators, through condensation of associated water vapor, using said robust and cheap equipment, the energy consumption of which is low and more than offset by the recovery of the latent heat of condensation of the water vapor.

A third main application of the invention is the extraction and upgrading of the latent heat of condensation of a vapor in a gas/vapor mixture, using said robust and cheap equipment. Said application includes heating, ventilating and air conditioning processes and installations.

Other applications of the invention will emerge from its detailed description.

### Background art

In the installation according to French patent publication 2 535 445, hot air is used as the carrier gas which extracts water under vapor form from the aggregates to be dried. The evaporated water is then separated from the carrier air by cooling under constant pressure the air/vapor mixture below its dew point, and collecting separately the water thus condensed. For cooling the air/vapor mixture, and heating it up after water separation, the evaporator and the condenser of a heat pump are used successively.

The driving energy for water separation is supplied as compression work of the working fluid of the heat pump.

Such installation thus requires a compression type heat pump, which is an expensive and delicate apparatus using special working fluids at rather high pressure.

In the process according to French patent publication 2 444 882, compressed air is used in an air ejector for creating a suction effect enabling to progressively evacuate the pipes to be dried. After mixing in the ejector with the expanded air, the evacuated mixture of the carrier gas and water vapor is compressed in a diffuser and rejected in the environment without separation of said water vapor from said mixture. The driving energy for evaporating the water in the pipe is supplied under the form of external compressed air. The energetic efficiency of this process is extremely poor, as it uses ejectors and requires high vacuum to enable sufficient drying effect.

U.S. Patent 3 977 850 shows a centrifugal separator which separates liquids entrained under the form of droplets in a gas stream by directing the mixture of fluids tangential to the diameter of a conduit. This device creates a centrifugal separation of liquid phase from gaseous phase in a two-phase stream.

The driving energy for separating the droplets from the main stream is the pressure differential of a fluid mixture throughout the separator.

In this separator, the main stream undergoes two successive expansions generating kinetic energy. The first one takes place in the centripetal spinner at the inlet section of the vortex pipe, and the second one in the ejector nozzle at the outlet section of the vortex pipe. The kinetic energy generated within the fluid by the spinner in the vortex pipe is almost entirely lost by friction between adjacent streamlines. Similarly, as the energetic performance of an ejector is very poor, only a very minor fraction of the kinetic energy of the fluid flowing out of the nozzle at the end of the vortex pipe can be recovered under the form of pressure.

Hence, the expansion of the gaseous component of the fluid mixture in this separator is almost insenthalpic. This fact rules out the possibility of any separation, including condensation followed by inertial separation, of a vapor mixed with a carrier gas flowing throughout this separator.

Belgian Patent 514 256 describes an apparatus aimed at agglomerating pre-existing fine solid or liquid particles entrained by a carrier gas, to which compressed air is added through an aerojet for pulverizing fine liquid droplets of an agglomerating liquid. The stream of gas which contains aerosols or micro-droplets passes at high subsonic velocity through a Venturi, in which mechanical shocks between particles cause the fine particles to agglomerate in larger clusters or particles, the size of which is sufficient to enable their capture by downstream cyclone collectors. The size of the clusters or particles thus obtained may be further increased by ionization of the particles at the inlet of the Venturi, and/or by submitting the flow downstream of the Venturi to sonic or ultrasonic standing waves generated by a siren, before collecting the particles.

The driving energy generating said mechanical shocks is the pressure differential of the fluid mixture throughout the Venturi, while external compressed air is used to feed the aerojet and the siren, and electricity is used to ionize the fine particles to be agglomerated.

This apparatus enables to increase by agglomeration the size of particles pre-existing in a two-phase fluid stream consisting mainly of a carrier gas without changing the total mass of said particles. While the two-phase fluid stream passes through the convergent section of the Venturi it may occur that a vapor mixed with the carrier gas gets partially condensed in the form of fine droplets as a result of the nearly isentropic expansion of the mixture of vapor and carrier gas. It may also occur that said droplets agglomerate by coalescence, like the particles entrained by the incoming fluid stream. However, as no device for collecting particles is provided at or near the throat of the Venturi, the particles continue to be entrained by the main stream in the diffuser part of the Venturi, where nearly isentropic recompression causes the carrier gas to heat up and thus to re-evaporate the liquid droplets formerly created by condensation during expansion. Such re-evaporation, if not complete at the outlet section of the Venturi, becomes complete after a short distance.

Hence the Venturi part of the separator described in said Belgian patent doesn't allow to separate a vapor from a carrier gas contained in a stream of monophasic gaseous fluid.

British Patent 1 283 587 describes a process and apparatus for separating the components of a mixture of gases which includes heavier and lighter species. The process comprises:

(a) accelerating said mixture of gases through a nozzle to form an expanded stream at supersonic velocity within a duct located downstream of the nozzle,

(b) placing in the expanded stream hollow probe means having a plurality of apertures facing upstream and extending across the width of the duct at a sufficient distance from said nozzle to permit a shock wave to form upstream of the leading edges of said probe means to intercept said stream on axes offset from the nozzle axis by a plurality of transverse distances (and optionally also on the nozzle axis),

(c) withdrawing from said hollow probe means through a flow passage common to said apertures, a portion of the gas stream enriched in said heavier species.

German patent application 2 301 467 shows a process similar to that one described in said British Patent, the difference being that the probes are disposed in at least three different sections of the duct which follows the supersonic expansion nozzle.

The process thus described in said British patent and German patent application is based on an inertial effect on the various components of the gaseous mixture caused by the extremely high decelerations taking place on the molecules pass through a standing shock wave to the area of stagnation immediately behind this wave.

Free stream Mach numbers need to be substantially higher than 1 and preferably of the order of 2 or 3 or more. Typical Knudsen numbers of from 0.02 to 10 are mentioned, and isentropic stagnation pressures range from high vacuum to 100 Torr.

The driving energy for gas separation is the pressure differential of the fluid mixture throughout the separator.

Such process and apparatus have an extremely poor energetic performance, as kinetic energy losses in standing shock waves are very large. Moreover, the very low absolute pressures required are completely impractical in the field of application of the present invention.

These facts rule out the possibility of separating, by condensation followed by inertial separation, a vapor mixed with a carrier gas flowing throughout this separator.

French Patent 1 230 416 describes a process and apparatus for separating a gaseous mixture of gaseous or vapor materials, more particularly isotopes.

This process is based on differential velocities of diffusion of the different molecules in the gaseous mixture.

The gaseous mixture first passes in a supersonic nozzle with an expansion pressure ratio larger than 1000. The stream flowing out of the nozzle enters in an enclosure in which it is partly diverted without special precautions aiming at recovering its kinetic energy, while the non diverted part of the flow passes through a truncated cone with a wide angle of aperture to enter in a second enclosure, wherefrom the stream is extracted at a pressure not exceeding 5% of the pressure of the gas stream entering the supersonic nozzle.

The driving energy for gas separation is the pressure differential of the fluid mixture throughout the separator.

The operating conditions in this separator are more or less similar to those described in the British patent and the German patent application referred to hereabove.

Due to the extremely poor energetic efficiency of this separator, its use is completely impractical in the field of application of the present invention, and any possibility of separating, by condensation followed by inertial separation, a vapor mixed with a carrier gas flowing throughout this separator, is ruled out.

U.S. Patent 3 109 721 describes a method and apparatus for separating a fluid mixture by sonic energy.

This process is based on the fact that a multicomponent fluid mixture may be separated into a fraction enriched into the heavier component and a fraction enriched into the lighter component by continuously introducing sonic energy to a zone of divergent cross-sectional area so as to establish sonic waves having energy gradients, and introducing the multicomponent fluid mixture into the zone. The fraction enriched into the heavier component is concentrated in a section of the zone where the cross-sectional area is relatively large and the fraction enriched into the lighter component is concentrated in a second section of the zone where the cross-sectional area is relatively small.

The introduction of the incoming stream as well as the extraction of both enriched streams are made perpendicularly to the axis of a truncated cone wherein resonant standing waves are created.

As shown by the figures mentioned in the specification, the separation factors are rather small, and the feed rates range from 160 to 2,640 cc/hour.

The driving energy in this separator is the sonic energy generated at the throat of the truncated cone, and not the pressure differential of the gaseous mixture throughout the separator.

The gaseous mixtures enriched in respectively light and heavy components are produced at opposite sections of the separator.

This process provides very poor yields and low throughputs.

These facts rule out the possibility of its practical use for separating a vapor from a carrier gas in the field of application of the present invention.

Belgian Patent 898 745 describes a process and apparatus for separating a mixture of fluids, which applies in fact to a mixture of gaseous constituents.

This process is based on the creation, within a gaseous mixture flowing at subsonic velocity as an annular stream with varying cross section in a plurality of axisymmetrical cavities, of resonant acoustic standing wave interacting with nappes of moving toroidal vortices. As a result of the acoustic pressure field and of the intense centrifugul force field within the vortices, a spatial separation of specific constituents of the mixture under gaseous or vapor form is obtained, thus enabling to divert, through axial and peripheral diverters or traps, gaseous mixtures enriched in said constituents.

The driving energy for separating the incoming gaseous stream into a main outflowing gaseous stream and a diverted outflowing gaseous stream with different compositions is the pressure differential of the gaseous mixture throughout the separator.

This aerodynamic separation process and apparatus enables to partially separate a vapor mixed with a carrier gas, into a diverted stream enriched into the vapor and a main stream enriched into the carrier gas.

The energetic efficiency of this process is poor, as the generation of interactive vortices and standing acoustic waves requires flow separation from the walls and recirculation: such process requires that high amounts of kinetic energy be generated from the pressure of the flowing gas, while the efficiency of pressur recovery is very low, due to the losses of kinetic energy in the recirculating flow and in the vortices.

Hence the adiabatic expansion of the gaseous flow throughout this separator is almost isenthalpic. This fact rules out the possibility of condensation of a vapor mixed with a carrier gas followed by inertial separation of the liquid droplets thus obtained.

Summarizing the state of the art: the known processes and apparatuses either do not separate a vapor from a carrier gas, or they do separate partially such vapor as a diverted gaseous stream enriched in said vapor with an energetic efficiency which is prohibitively low in the fields of application of the present invention, or they need the use of delicate and expensive apparatuses such as heat pumps to achieve said vapor separation with a practicable energetic efficiency.

Summary of the invention

It is an object of the present invention to provide an improved process and apparatus for extracting a liquid from an aggregate, by evaporation in a stream of carrier gas, followed by separation of said evaporated liquid from said carrier gas, with an energetic efficiency practicable in the fields of application mentioned, and without using delicate and expensive apparatuses such as heat pumps.

It is another object of the invention to provide an improved process and apparatus for separating aerodynamically under liquid form a vapor mixed with a carrier gas in an aerodynamic separator having no moving part and wherein the driving energy is essentially the pressure differential of the fluid mixture throughout said separator.

The invention is related to a process and to an apparatus for extracting at least partially a liquid from an aggregate as described in the attached set of claims.

Other objects, advantages and features of this invention will become apparent to one skilled in the art upon consideration of the written specification, appended claims, and attached drawings.

In the process and apparatus according to the invention, a carrier gas entering a circuit is used to extract a liquid substance from an aggregate, by evaporation of said substance. The mixture of said vapor with said carrier gas is then driven through an aerodynamic separator wherein the driving energy supplying the separative work is provided by the pressure differential of the gas/ vapor mixture throughout the separator. Said separator causes the main stream of carrier gas to lose a substantial part of said vapor substance it contained, while the stream diverted by the separator is substantially enriched into said substance in vapor and/or liquid form. In the event that said form is at least partially vapor, the main part of the vapor contained in the diverted stream is then condensed in a heat exchanger where its condensation heat is transferred to the main stream of carrier gas flowing out of the separator. If used in closed cycle, and thus-reheated carrier gas is driven to the section where it entered the circuit, to run again along the same circuit. Alternatively, it is used in open cycle, in which case fresh carrier gas is heated up in heat exchangers, successively by the outflowing main stream of used carrier gas and by the outflowing derived stream leaving the separator if this stream contains separated vapor.

Substantially all the steady state energy requirements of the process are supplied under the form of mechanical energy used to drive one or several blowers which move the main stream of gaseous mixture against all head losses throughout the complete circuit, whether closed or open.

In a particular embodment of the invention, the aerodynamic separator has the general shape of a convergent-divergent nozzle. In the inlet plenum of this nozzle, auxiliary means may be provided in order to enhance the condensation process which occurs in the convergent part of the nozzle, where the stream of the mixture of vapor and carrier gas undergoes an adiabatic, quasi-isentropic expansion producing a high velocity flow in which part of the vapor condenses as fine droplets entrained by the stream. Due to their large density as compared with the density of the gaseous phase, said droplets tend to continue to travel along straight lines, thus agglomerating and diffusing by their inertia through the curved streamlines of the flow of expanded mixture. Traps for collecting droplets are provided in the throat region of the nozzle. They are located both axially and along the inner surface of the nozzle, so as to intersect the streamline of the droplets. Shortly after the throat of the separator nozzle, the high velocity stream of carrier gas enters the diffuser, i.e. the divergent part of the separator nozzle, where its kinetic energy causes an adiabatic, quasi-isentropic recompression of the flow. As part of the quantity of vapor contained in the inlet stream is separated under liquid form, the stream flowing out of the separator nozzle has a higher specific enthalpy, and thus a higher temperature than the inlet stream. Hence this stream can be used as a source of useful heat.

In another particular embodiment of the invention, the aerodynamic separator is an enclosure in which the stream of the mixture of vapor and carrier gas undergoes an adiabatic, quasi-isentropic expansion including a steady component and an oscillatory component. Said expansion causes part of the vapor to condense into fine droplets. Traps are provided for collecting these droplets at locations where they intersect the streamlines of said droplets in the region of the enclosure where the steady component of the expansion is close to its maximum. The steady component of the expansion is obtained by a reduction of the cross section of the stream. The oscillatory component is obtained by the action, within the flowing fluid, of very intense sonic or ultrasonic waves. Along a period of said oscillation, the expansion phase is followed by a compression phase during which the droplets of condensed vapor resulting from the expansion phase tend toward re-evaporation. However condensation prevails over evaporation, as it is a mass phenomenon within the gaseous phase, while re-evaporation only takes place at the surface of the droplets. After maximum expansion of the stream of gaseous mixture and separation of the condensed droplets, the high velocity gaseous stream enters a diffuser where pressure recovery takes place through an adiabatic, quasi-isentropic recompression.

Brief description of the drawings

Figure 1 shows an application of the invention to closed cycle industrial drying.

Figure 2 shows the same application using an aerodynamic separator extracting a steam-enriched air/vapor mixture instead of liquid water.

Figure 3 shows a convergent-divergent separator nozzle according to a particular embodiment of the invention.

Figure 4 shows a particular embodiment of the convergent section of the latter separator nozzle.

Figure 5 shows an application of the invention to open cycle industrial drying.

Figure 6 shows a particular embodiment of the aerodynamic separator wherein a spherical high intensity sonic wave is superimposed to a steady stream of expanding flow in a truncated conical convergent section, and wherein pressure recovery of the stream takes place in a diffuser section having a truncated conical divergent shape.

Detailed description of preferred embodiments

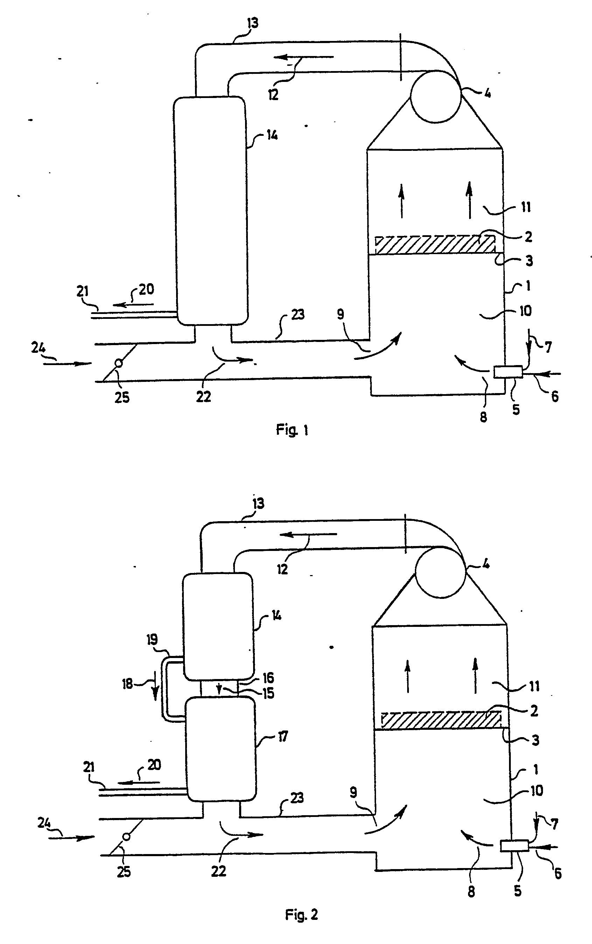

In the application illustrated by Figure 1, drying takes place in an enclosure 1 in which an aggregate, for instance wet germinated barley 2, stays on a tray 3. The blower 4 operates together with the burner 5 which is fed with combustion air 6 and fuel 7, producing combustion gases 8 which are mixed with the drying air 9. The burner 5 is controlled so as to maintain in the lower part 10 of the enclosure 1 the drying air temperature at the required level.

Said air then crosses the wet barley layer 2 and leaves the enclosure 1 through its upper part 11 at a temperature which varies during the drying operation, but which is 20 to 30°C lower than the temperature in 10. The moist air sucked from enclosure 1 in section 11 by the blower 4 is blown at 12 in a duct 13 which brings it to the aerodynamic separator 14. The latter separates the incoming stream of moist air into an outgoing main stream 22 of hot air with reduced moisture content and an outgoing diverted stream 20, composed essentially of cold water which is then rejected through the duct 21. The main stream is driven through the duct 23 up to location 9 where it runs again along the drying circuit. A valve 25 is provided in the duct 23 to enable the addition of fresh air 24 in order to compensate for leaks or losses from the complete installation to the outside atmosphere.

Figure 2 shows a variant of the same embodiment in which the stream of air 15 leaving the aerodynamic separator is driven through a duct 16 to a heat recovery exchanger 17. The diverted stream 18, which leaves the separator 14, is enriched in water vapor. It is brought by the duct 19 to the heat exchanger 17 where it transfers its heat through the heat exchanger walls to the main stream 15. The diverged flow 18 is thus cooled and most of the water vapor it contained is condensed and then rejected at 20 by the duct 21. The main stream, after having been heated in the heat recovery exchanger 17, gets out at 22.

As shown by Figures 1 and 2, the process according to the invention is very simple. In steady state, the energy required by the operation of the process is supplied substantially under mechanical form through the blower 4.

The fuel consumption required by the burner 5 is only a small fraction of what it would be if the blower 4 would reject the stream 12 in the atmosphere and if the air stream at 9 would come entirely from the external atmosphere. As compared with the known processes, the process according to the invention enables to reduce the energy consumption to a minimal value, without requiring high investment and maintenance costs. Indeed a burner 5 and a blower 4 are required in all the existing processes in this field of the invention. If used, the heat exchanger 17 is an equipment required by all the known processes providing recovery of heat from used air to fresh air. Its investment and maintenance costs are moderate.

The aerodynamic separator 14 is a static apparatus, the investment and operation costs of which are moderate.

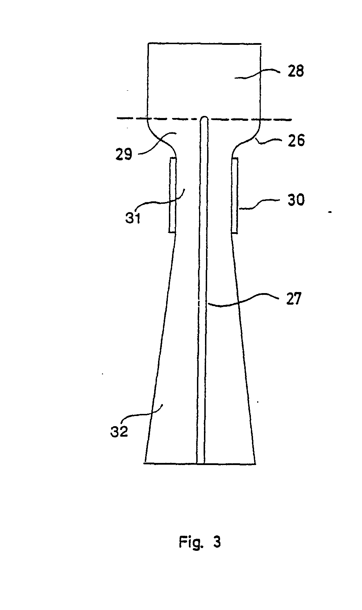

In the preferred embodiment of the invention shown in Figure 3, the moist air stream enters a vertical separator 26 having the general shape of an axisymmetrical convergent-divergent nozzle. Along the axis of the separator nozzle 26, a cylindrical collector 27, of which the diameter is small, is provided. The wet incoming air, having a velocity parallel to the axis of the nozzle, enters the upper plenum 28 of the separator nozzle, where means may be provided to cause the creation within the flowing fluid of nucleation centers. Said means may consist of devices which pulverize droplets of water or of any other material stimulating the nucleation, and/or devices which generate sonic or ultrasonic waves, and/or electromagnetic radiation having adequate frequency, f.i. ultraviolet rays, laser rays, ionizing rays, radar waves, and/or electrostatic fields. The stream of moist air then enters into the convergent part 29 of the separator nozzle 26, wherein an expansion occurs, causing the condensation of vapor into fine dispersed droplets which are projected on the external surface of the trapping collector 27 and on the internal surface of the nozzle throat, which is surrounded by a collecting chamber 30. Said surfaces are made on the full trapping length of the collectors 27 and 30, in a porous material or in a material having any other known permeable structure, through which the condensate formed by the droplets is sucked into the collector 27 and the collecting chamber 30, wherefrom it is driven outside the main circuit by any known means.

After said separation of the droplets, the air stream leaving the throat 31 of the separator nozzle 26 enters the divergent part 32 of said nozzle where it undergoes an adiabatic, quasi-isentropic recompression which brings its pressure back to a level close to that of the pressure in 28, and which increases its temperature to a level higher than the temperature level in 28. The throat of the nozzle has a constant section along a length sufficient to enable an efficient collection of the condensate.

The velocity at any point of the main stream in the separator nozzle 26 only has axial and radial components, exclusive of any tangential component. As a variant, one may provide at the inlet section of the separation nozzle 26 a cascade of blades which induces a free vortex flow which is superimposed to the axial and radial flow. Said free vortex, of which the amplitude may be small compared with the axial and radial components of the velocity of the main stream, favors the projection of the droplets of condensate on the internal surface of the collecting chamber 30 and may thus improve the efficiency of separating said droplets.

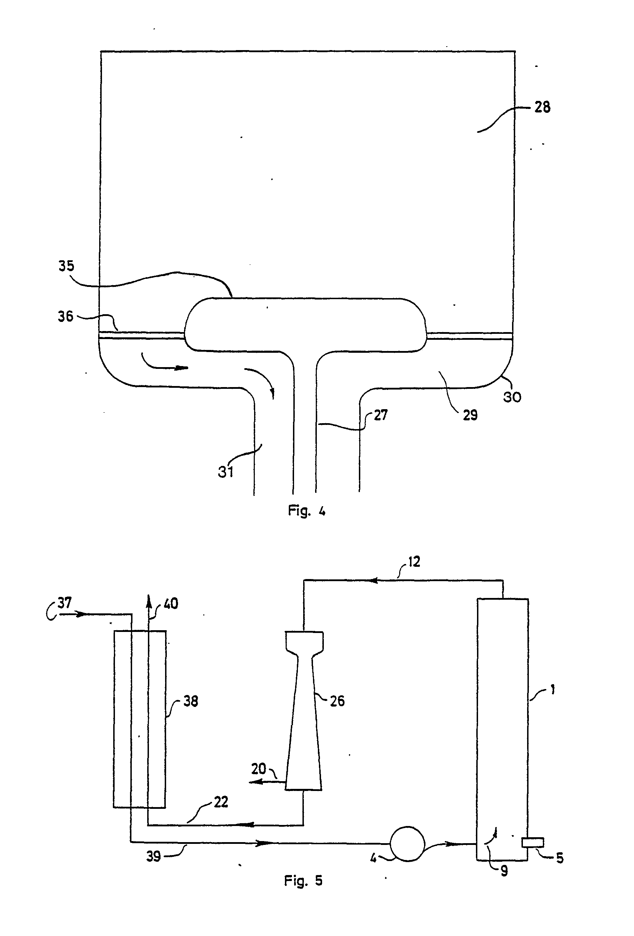

Among the multiple variants which are possible for applying the process and apparatus according to the invention, one must mention those illustrated by Figures 4 and 5.

Figure 4 shows a particular variant of the upper part of the separator nozzle 26 illustrated in Figure 3. In this variant, between the upper space 28 and the convergent part 29, there is a central part 35 and a cascade of blades 36. Said cascade gives to the vertical flow of the main stream a tangential component which creates within this flow a free vortex with moderate amplitude. Due to the particular shape of the convergent part of the separator nozzle shown in Figure 4, the axial component of the flow progressively vanishes along the streamlines, as it is progressively replaced by a centripetal radial component, thus creating a zone wherein the tangential component of the velocity of the droplets of condensate orient said droplets horizontally towards the external wall (30) of the convergent part 29 of the nozzle, causing them to travel against the pressure gradient in the main stream. The condensate reaching the wall is sucked by a collector in a way similar to that one described for Figure 3. This particular provision may improve the efficiency of separating said droplets during the expansion. At the end of this expansion, the radial centripetal stream is bent as shown in Figure 4 to become again axial in view of its recompression in the divergent part (32) of the nozzle.

In Figure 5 the main stream of external fresh air is sucked at 37 and driven into a countercurrent heat exchanger 38 where it is heated by the stream of hot dried air 22 flowing out of the separator nozzle 26. The main current of fresh air thus heated in the heat exchanger 38 is driven through a duct 39 to the blower 4, which blows it at 9 in the drier's enclosure 1. The main stream of wet air 12 flowing out of the drier's enclosure then enters in the aerodynamic separator nozzle 26, wherefrom the diverted stream, composed principally of condensate, gets out at 20, the main stream 22 of hot dried air getting in the countercurrent exchanger 38 where it is cooled down to a temperature close to that of the external atmosphere, and from which it gets out in the atmosphere at 40. As compared with the embodiment of the invention shown in Figure 1, the variant of the invention shown in Figure 5 differs by the additional heat exchanger 38. As shown in Figure 5, the operation in open cycle of the process according to the invention enables a permanent renewal of the air running through the drier's enclosure, at the cost of a slight increase of the enervy consumption. Said increase results from, on one side, the increase of power output of the blower 4 which corresponds to the additional head losses in the heat exchanger 38, and on the other side, to the additional heat to be supplied by the burner 5, which must partially offset the temperature difference of the main stream between its inlet at 37 and its outlet at 40.

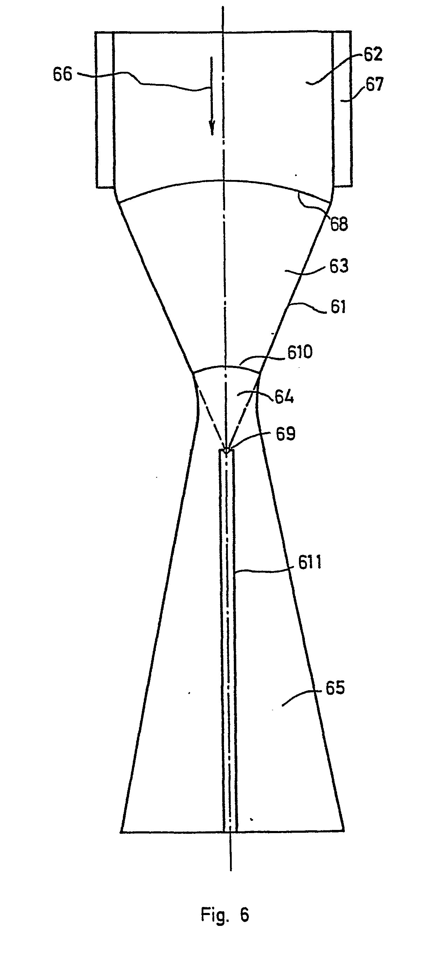

The particular embodiment represented in Figure 6 shows an application of the invention to drying moist air. This operation takes place in a separator enclosure 61 having the general shape of an axisymmetric nozzle comprising a cylindrical chamber 62, a convergent truncated cone 63, a throad 64 and a divergent 65. As shown in Figure 6 these elements are linked in such a way as to avoid angular points in the axial cross-section of the nozzle. The general direction of the moist air flowing into the nozzle is shown by the arrow 66. The moist air entering the chamber 62 is submitted in this chamber to an acoustic radiation generated from the annular enclosure 67 by generators of sonic waves of any known type, so that at the inlet section of the air in the convergent part 63, the wave front has the smape of a spherical surface 68 of which the geometric center is located at a point 69 which is on the axis of the nozzle, downstream the minimal section of its throat 64.

An adiabatic, quasi-isentropic expansion of the flowing fluid occurs in the convergent truncated cone 63. The steady component of this expansion results from the reduction of the cross-section of the fluid stream between the inlet of the convergent part 63 and the throat 64 of the nozzle 61. The oscillatory component of this expansion results from the spherical acoustic wave of which the front progresses from 68 to 610.

All the streamlines within the convergent part 63 have rectilinear paths which are perpendicular to the front of the spherical acoustic waves and which converge toward a focus located at point 69. Under the effect of the combined steady and oscillatory expansions of the fluid moving in the convergent part 63, part of the water vapor contained in the incoming stream of moist air condenses as droplets. As the density of these droplets is larger, by a factor of the order of one thousand, than the density of the moist air entering the throat 64 of the nozzle, these droplets follow their rectilinear paths towards focus 69, and are only slightly deviated by the streamlines of dehumidified air which they cross within the throat 64 of the nozzle.

These droplets are then collected in a hollow cylindrical collector 611, having a small diameter, and located along the axis of the divergent part 65 of the nozzle, and of which the circular inlet cross-section is centered at point 69 or slightly behind this point along the direction of the flow. The air stream from which the droplets were thus swept away in the region of the throat of the nozzle enters the divergent part 65 where it undergoes an adiabatic, quasi-isentropic recompression transforming into enthalpy the kinetic energy it has in the throat of the nozzle.

As shown by Figure 6, the driving energy required by the separation of the fluid mixture in the nozzle 61 is supplied substantially as a pressure differential of said fluid mixture throughout the separator nozzle, while the amount of the acoustic energy radiated by the sonic wave only represents a minor fraction of said driving energy. Moreover, the required amount of energy of said sonic radiation may be generated from said driving energy by acoustic coupling between the annular enclosure 67 and the stream flowing in section 62 of the nozzle.

In a particular embodiment of the invention, use is made of the sonic radiation generated within the main stream of moist air by the blower which raises the pressure of said main stream. Said sonic radiation is emitted anyway upstream as well as downstream by any blower. Said sonic radiation may be properly enhanced, then shaped into a spherical centripetal wave directed toward the focus located at point 69.

Alternatively, said radiation may be used in a way such that its wave fronts progress in the direction opposite to that of the main stream, in which case the shape of the diffuser of the separator nozzle should be a truncated cone as well as the shape of the convergent part of said nozzle.

Whether or not the sonic radiation front progresses backward rather than forward in the separator nozzle, its specific energy peaks in the throat region of said nozzle.

Alternatively to generating the sonic radiation from the fluid pressure, or to using the sonic radiation created by the blower, it may be convenient in particular cases to produce separately the required sonic radiation, for instance by electromagnetic transducers, or by sound generators such as sirens, in which cases the sonic energy is supplied by an external source.

Although the description of the process and apparatus according to the invention has been made for the particular application to industrial drying, said process using similar apparatus is applicable in any case where at least one constituent of any gaseous mixture can be extracted from said mixture through an adiabatic, quasi-isentropic expansion causing said constituent to get partially condensed, and then separated under condensed form.

The composition of the condensate thus obtained results from the composition of the gaseous mixture which cs processed. For instance if the process according to the invention is applied to flue gases from industrial boilers burning coal, the condensate will not be pure water, but a solution in water of one or several constituents of said flue gases, such as $SO_2$, $NO$, $NO_2$, $CO_2$, ...

This particular feature enables to separate easily, not only condensable vapors, but also gases difficult to condense, provided they are soluble in the condensate of easily condensable vapors. Said vapors can thus have a sweeper or scavenger action.

In case the contents of said scavenging vapor into the carrier gas is insufficient to sweep out of said carrier gas specific gases to be separated, or if the scavenging capacity is insufficient, one may add to the mixture to be separated, before processing it, an additional constituent under gaseous and/or liquid and/or solid form (droplets or particles in suspension), which is able to act as a sweeper or scavenger of said specific gases. For instances sulphur dioxide $SO_2$ can be absorbed very easily by added acetic acid, of which the vapor is easily condensed, and easily absorbed by the condensate of water vapor. Said sulphur dioxide can thus be integrally swept out, and recovered by processing the separated liquid by any known means.

The range of vapors and gases which can be extracted by the process and apparatus according to the embodiment of the invention shown in Figure 6 is very wide, as the ratio between the initial pressure of the gaseous mixture to be processed and the minimal instantaneous pressure within the flowing mixture may be very high. Indeed this ratio is the product of the pressure ratio of the steady component of the expansion and the pressure ratio of the oscillatory component of the expansion. The greater the global pressure ratio thus obtained, the greater is the enthalpy drop after expansion, the greater is the corresponding temperature drop, and the more efficient is the separation achieved by condensation.

In fact, the invention is applicable without any restriction to the extraction of uny liquid from an aggregate. Said aggregate may be a mixture or a combination of different chemical or isotopic components in any proportions. The liquid to be extracted can be a simple substance or a mixture or a combination of different chemical or isotopic components in any proportion. The carrier gas can be composed of any constituents in any proportions.

**Claims**

1. A process for extracting, in an open or closed circuit, at least partially a liquid from an aggregate, by evaporation in a stream of carrier gas, followed by separation of at least a part of said evaporated liquid from said stream of carrier gas, characterized in that said separation is performed adiabatically and quasi-isentropically in an aerodynamic separator having no moving part, and in which the source of energy which provides substantially the separative work is the pressure differential of the carrier gas throughout the separator.

2. The process of claim 1 characterized in that the aerodynamic separation comprises:

(a) accelerating adiabatically and quasi-isentropically at subsonic velocities mixture of vapor and carrier gas through the convergent part of a convergent/divergent nozzle to form within the throat region of the nozzle an expanded stream of high velocity fluid which contains droplets of liquid substance condensed from the gaseous mixture as a result of its expansion,

(b) withdrawing the droplets of condensate from the stream within the throat region of the nozzle by collecting means located along the axis and along the wall of the nozzle at places which intersect the paths of the droplets,

(c) decelerating adiabatically and quasi-isentropically the high velocity stream of the mixture of carrier gas und remaining vapor in the divergent part of the nozzle.

3. An apparatus for carrying out the process of claim 1 or 2, provided with means for evaporation in a stream of carrier gas and an aerodynamic separator (14), characterized in that said aerodynamic separator comprises:

(a) a convergent/divergent nozzle (26, 61) having a throat region (31, 64), for causing the mixture of vapor and carrier gas to form within said throat region (31, 64) an adiabatically and quasi-isentropically expanded stream of high subsonic velocity fluid which contains droplets of liquid substance condensed from the gaseous mixture as a result of its expansion

(b) collecting means (27, 69, 611) located along the axis and along the wall (30) of the nozzle at places which interest the paths of said droplets of condensate, for causing their adiabatic and quasi-isentropic withdrawal from the stream within said throat region (31, 64)

(c) means (32, 65) for causing the stream of high subsonic velocity fluid leaving the throat (31, 64) of the nozzle to decelerate adiabatically and quasi-isentropically within the divergent part of the nozzle (32, 65).

4. Apparatus of claim 3 characterized in that means are provided upstream of the convergent/divergent nozzle (26, 61) to generate nucleation centers within the expanding stream.

5. Apparatus of claim 3 or 4 characterized in that means located upstream (67) or downstream of the convergent/divergent nozzle (26, 61) are provided to generate an intense acoustic radiation to which the expanding stream is submitted in the convergent part (29, 63) of the nozzle.

6. Apparatus according to any one of claims 3 to 5 characterized in that means are provided to cause the streamlines of the expanding fluid mixture upstream the throat region (31, 64) of the nozzle to converge substantially toward a focus (69) located on the axis of the nozzle, within the throat region and downstream the minimal cross-section of the throat.

7. Apparatus according to any one of claims 3 to 6 characterized in that means are provided to shape as a spherical surface centered at a point on the axis of the nozzle the front of an acoustic radiation progressing upward or downward the expanding fluid stream upstream the throat region (64) of the nozzle.

8. Apparatus according to any one of claims 3 to 7 characterized in that the location (69) of the focus of the streamlines is identical to the location of the center of the spherical front (68) of the acoustic radiation.

9. Apparatus according to any one of claims 3 to 8 characterized in that means (35, 36) are provided within the convergent part (29) to cause at least part of the condensed droplets to travel against the pressure gradient within part of the expanding stream until they reach the collecting means (30) which withdraw them from the stream.

**Patentansprüche**

1. Verfahren zur wenigstens teilweisen Abscheidung von Flüssigkeit aus einem Aggregat im offenen oder geschlossenen Kreislauf durch Verdampfung mit einem Trägergasstrom, aus welchem daraufhin mindestens ein Teil der verdampften Flüssigkeit abgetrennt wird, dadurch gekennzeichnet, daß die Abscheidung adiabatisch und quasi-isentropisch in einem ohne bewegliche Teile ausgebildeten, aerodynamischen Separator ausgeführt wird, wobei die für die Abscheidung im wesentlichen erforderliche Energie vom Differenzdruck des Trägergases im Separator erzeugt wird.

2. Verfahren nach Anspruch 1, dadurch gekennzeichnet, daß die aerodynamische Abscheidung umfaßt:
a) die adiabatische und quasi-isentropische Beschleunigung der Dampf/Trägergas-Mischung bei Unterschallgeschwindigkeit im konvergierenden Abschnitt einer konvergierenden/divergierenden Düse bei Bildung einer expandierten Hochgeschwindigkeitsströmung des Fluides im Halsbereich der Düse, wobei das Fluid aus der Gasmischung durch die Expansion kondensierte Tröpfchen der flüssigen Substanz führt,
b) die Rückführung der Kondensattröpfchen aus der Strömung im Halsabschnitt der Düse mittels eines sich entlang der Achse und der Wandung der Düse erstreckenden Sammlers an die Tröpfchenbahnen schneidenden Stellen,
c) die adiabatische und quasi-isentropische Bremsung der Hochgeschwindigkeitsströmung der Mischung des Trägergases mit dem in ihm verbliebenen Dampf im divergierenden Düsenabschnitt.

3. Vorrichtung zur Ausführung des Verfahrens nach den Ansprüche 1 und 2, bei der Mittel zur Verdampfung in einer Trägergasströmung und ein aerodynamischer Separator (14) vorgesehen sind, dadurch gekennzeichnet, daß der aerodynamische Separator die nachstehenden Merkmale aufweist:
a) eine konvergierende/divergierende Düse (26, 61) mit einem Halsabschnitt (31, 64) für die Bildung einer adiabatisch und quasi-isentropisch expandierenden Unterschall-Hochgeschwindigkeitsströmung des Fluides, welches aus der Gasmischung infolge ihrer Expansion kondensierte Flüssigkeitströpfchen führt;
b) einen Sammler (27, 69, 611), der sich entlang der Achse und entlang der Wandung (30) der Düse an Stellen befindet, die die Bahnen der kondensierten Tröpfchen schneiden, um ihre adiabatische und quasi-isentropische Rückführung aus der Strömung im Halsabschnitt (31, 64) zu ermöglichen;
c) Mittel (32, 65) im divergierenden Abschnitt der Düse für die adiabatische und quasi-isentropische Abbremsung der den Halsabschnitt (31, 64) der Düse verlassenden Unterschall-Hochgeschwindigkeitsströmung des Fluids.

4. Vorrichtung nach Anspruch 3, dadurch gekennzeichnet, daß stromaufwärts der konvergierenden/divergierenden Düse (26, 31) Mittel zur Erzeugung von Keimbildungszentren innerhalb der expandieren Strömung vorgesehen sind.

5. Vorrichtung nach den Ansprüche 3 oder 4, dadurch gekennzeichnet, daß stromaufwärts (67) oder stromabwärts der konvergierenden/divergierenden Düse (26, 61) Mittel für eine intensive Schallabstrahlung vorgesehen sind, der die expandierende Strömung im konvergierenden Abschnitt (29, 63) der Düse ausgesetzt ist.

6. Vorrichtung nach einem der Ansprüche 3 bis 5, dadurch gekennzeichnet, daß Mittel für die konvergierende Ausrichtung der Stromlinie der expandierten Fluidmischung oberhalb des Halsabschnittes (31, 64) der Düse in Richtung auf einen Brennpunkt (69) vorgesehen sind, der auf der Düsenachse innerhalb des Halsabschnittes und stromabwärts des kleinsten Querschnittes des Halsabschnittes liegt.

7. Vorrichtung nach einem der Ansprüche 3 bis 6, dadurch gekennzeichnet, daß Mittel für die Ausbildung der Schallabstrahlungsfront als eine sphärische Fläche mit bezüglich eines Punktes auf der Düsenasche stromaufwärts des Halsabschnittes (64) der Düse zentrierten Krümmung vorgesehen sind, wobei die Schallabstrahlung stromaufwärts oder stromabwärts der expandierenden Fluidströmung fortschreitet.

8. Vorrichtung nach einem der Ansprüche 3 bis 7, dadurch gekennzeichnet, daß die Stelle des Brennpunktes (69) der Stromlinie mit dem Krümmungsmittelpunkt der sphärischen Fläche (68) der Schallabstrahlung übereinstimmt.

9. Vorrichtung nach einem der Ansprüche 3 bis 8, dadurch gekennzeichnet, daß der konvergierende Abschnitt (29) Mittel (35, 36) zur Führung wenigstens eines Teils der kondensierten Tröpfchen entgegengesetzt zum Druckgradienten innerhalb eines Teils der expandierenden Strömung aufweist, bis sie den Sammler (30) erreichen, der sie aus der Strömung zurückführt.

**Revendications**

1. Procédé pour l'extraction au moins partielle, dans un circuit ouvert ou fermé, d'un liquide d'un agrégat, par évaporation dans un courant de gaz porteur, suivie par une séparation d'au moins une partie dudit liquide évaporé dudit courant de gaz porteur, caractérisé en ce qu'on effectue ladite séparation de manière adiabatique et quasi isentropique dans un séparateur aérodynamique ne comportant pas d'organe mobile et dans lequel la source d'énergie qui fournit substantiellement le travail de séparation est constituée par le chute de pression du gaz porteur à travers le séparateur.

2. Procédé selon la revendication 1 caractérisé en ce que la séparation aérodynamique comporte:

(a) l'accélération adiabatique et quasi isentropique, à des vitesses subsoniques, du mélange de vapeur et de gaz porteur à travers la partie convergente d'une tuyère convergente/divergente de manière à former, dans la zone rétrécie de la tuyère, un courant de fluide détendu de vitesse élevée, qui contient des gouttelettes de substance liquide condensée à partir du mélange gazeux par suite de la détente de celui-ci;

(b) l'extraction des gouttelettes de condensat du courant dans la zone rétrécie de la tuyère à l'aide de moyens de captage disposés le long de l'axe et le long de la paroi de la tuyère, à des endroits qui forment une intersection avec la trajectoire des gouttelettes,

(c) la décélération adiabatique et quasi isentropique du courant à vitesse élevée de mélange de gaz porteur et de vapeur résiduelle dans la partie divergente de la tuyère.

3. Dispositif pour la mise en oeuvre du procédé de la revendication 1 ou 2, comportant des moyens destinés à l'évaporation dans un courant de gaz porteur ainsi qu'un séparateur aérodynamique (14), caractérisé en ce que ledit séparateur aérodynamique comporte:

(a) une tuyère convergente/divergente (26, 61) munie d'une zone rétrécie (31, 64), de telle sorte que le mélange de vapeur et de gaz porteur forme, dans ladite zone rétrécie (31, 64) un courant de fluide de vitesse subsonique élevée détendu adiabatiquement et quasi isentropiquement et qui contient des gouttelettes de substance liquide condensée à partir du mélange gazeux par suite de la détente de celui-ci,

(b) des moyens de captage (27, 69, 611) disposés le long de l'axe et le long de la paroi de la tuyère, à des endroits qui forment une intersection avec la trajectoire desdites gouttelettes de condensat, en vue de l'extraction adiabatique et quasi isentropique de celles-ci du courant, à l'intérieur de ladite zone rétrécie (31, 64),

(c) des moyens (32, 65) permettant la décélération adiabatique et quasi isentropique de courant de fluide de vitesse subsonique élevée quittant le col (31, 64), dans la partie divergente de la tuyère (32, 65).

4. Dispositif selon la revendication 3 caractérisé en ce qu'il comporte des moyens en amont de la tuyère convergente/divergente (26, 61) en vue de créer des centres de nucléation à l'intérieur du courant en cours de détente.

5. Dispositif selon la revendication 3 ou 4 caractérisé en ce qu'il comporte des moyens agencés en amont (67) ou en aval de la tuyère convergente/divergente (26, 61) pour générer un rayonnement acoustique intense auquel est soumis le courant en cours de détente dans la partie convergente (29, 63) de la tuyère.

6. Dispositif selon l'une quelconque des revendications 3 à 5 caractérisé en ce qu'il comporte des moyens destinés à provoquer la convergence des lignes de courant de mélange fluide en cours de détente en amont de la zone rétrécie (31, 64) de la tuyère substantiellement vers un foyer (69) disposé sur l'axe de la tuyère, à l'intérieur de la zone rétrécie et en aval de la section minimum du col.

7. Dispositif selon l'une quelconque des revendications 3 à 6 caractérisé en ce qu'il comporte des moyens destinés à conférer une forme de surface sphérique centrée sur un point de l'axe de la tuyère au front d'un rayonnement acoustique progressant en sens inverse ou dans le même sens que le courant de fluide en cours de détente, en amont de la zone rétrécie (64) de la tuyère.

8. Dispositif selon l'une quelconque des revendications 3 à 7 caractérisé en ce que la situation (69) du foyer des lignes de courant est identique à la situation du centre du front sphérique (68) du rayonnement acoustique.

9. Dispositif selon l'une quelconque des revendications 3 à 8 caractérisé en ce qu'il comporte des moyens (35, 36) disposés dans la partie convergente (29) et destinés à permettre le déplacement d'au moins une partie des gouttelettes condensées à l'encontre du gradient de pression, dans une partie du courant en cours de détente, jusqu'à ce qu'elles atteignent les moyens de captage (30) qui les extraient du courant.

Fig. 1

Fig. 2

Fig. 3

Fig. 4

Fig. 5

Fig. 6